# EUROPEAN PATENT APPLICATION

(11) **EP 2 341 670 A1**
(43) Date of publication of application: **06.07.2011**
(21) Application number: 09252932.0
(22) Date of filing: 31.12.2009
(51) Int. Cl.: H04L 12/56, H04W 40/24

(54) **Data network**

(71) Applicant: Sony Computer Entertainment Europe Limited, London W1F 7LP (GB)
(72) Inventor: The designation of the inventor has not yet been filed
(74) Representative: Turner, James Arthur

(57) **Abstract**

A data network comprises a master data communications device; one or more slave data communications devices; and network interconnections linking the master device and the one or more slave devices for data communication. The master device and the slave devices are arranged to cooperate for joint execution of a data processing task such as a games processing task. Each of the master device and the one or more slave devices has a respective independent internet connection. The master device is operable to select a route from a set of two or more routes for the exchange of data, relating to the data processing task, with an internet server, one of the routes being via the master device's own internet connection, and another of the routes being via one of the slave devices and that slave device's own internet connection; and each slave device is operable to conduct all exchanges of data, relating to the data processing task and which require internet access, with the master device. The arrangement is such that the master device's own internet connection and the one or more slave devices' own internet connections are consolidated to provide the master device with a consolidated internet connection of greater data transfer capacity than the master device's own internet connection; and that all exchanges of internet data relating to the data processing task take place via the master device and the consolidated internet connection.

## Description

This invention relates to data networks.

Many entertainment, administration and communication devices make use of a connection to the internet in order to carry out their normal operations. For example, home entertainment machines such as the Sony ® PlayStation 3 ® (PS3) machine, personal computers and mobile telephones, games machines or personal digital assistants all routinely use internet connections.

In a domestic environment, internet connectivity is generally provided by a so-called broadband connection over a telephone line or a cable connection. The term "broadband" is not uniquely defined, but the United States Federal Communications Commission (FCC) defined "Basic Broadband" in 2009 as nominal data transmission speeds exceeding 768 kilobits per second (Kbps) in at least one direction: "downstream" (from the Internet to the user's computer) or "upstream" (from the user's computer to the Internet). For convenience, this will be adopted as a definition of "broadband" in the present application.

In the case of a connection over a telephone line (a so-called digital subscriber line or DSL connection), the data transfer capacity (the expression being used here to describe a maximum rate of data transfer rather than a maximum total quantity of data allowed over a charging period) may be asymmetric, i.e. it may differ between "uploads", that is data transfer from the home machine to an internet site, and "downloads", that is data transfer from an internet site to the home machine. Also, the connection may form part of a shared provision, so that its instantaneous data transfer capacity in either direction may well depend on how much others are using their own broadband connections, as well as depending on physical factors such as the distance from the telephone exchange, and commercial factors such as the amount of nominal data transfer capacity that the user has paid for. With a cable connection, the data transfer capacity is again limited by the data transfer capacity that the user has paid for, and similar issues regarding sharing of provisions can apply.

Mobile devices are also subject to constraints on data transfer capacity of their internet connections. Two main ways in which a mobile device can benefit from an internet connection are via a wireless local network (so-called "WiFi") link to a broadband router, i.e. a wireless base station which itself has a connection to the internet, or via a telecommunications link such as a so-called 3G connection to a telecommunications provider. Here "3G" literally signifies "third generation" mobile technology but is used in the present description as a generic term for mobile telephone data transfer services providing a connection to the internet over a wireless telecommunications network, and so encompasses services using data transmission systems according to telecommunication standards such as UMTS, CDMA2000, so-called 3.5G systems such as HSPA, so-called 4G systems, various upgraded versions of CDMA2000 such as 1xRTT, 1xEV-DO and 1xEV-DV, and future mobile telephone-based data transfer and internet connection systems.

In the case of a WiFi link, one limitation on data transfer capacity will be the maximum data transfer capacity of the connection between the router and the internet. Another constraint relates to the signal strength of the WiFi connection at the router and the mobile device - a poorer signal strength will tend to give a lower data transfer rate, though the relationship between signal strength and data transfer rate is not a linear one. Also, at the time of filing this application, data transfer rates achievable over a domestic quality WiFi network are of the order of 50 Mbps (Megabits per second) or more, which is many times the maximum data transfer capacity of a domestic broadband connection, which means that the WiFi network itself is unlikely to be a limiting factor for such a mobile device. So, the term "data transfer capacity" or similar is used in the present application to refer to the greatest constraint on the instantaneous rate of data transfer to and/or from the internet at a particular time. For example, if a WiFi device is connected via a 50 Mbps WiFi link to a router having a 256 Kbps internet connection, the data transfer capacity of that overall internet connection is considered to be 256 Kbps. It is irrelevant, for the consideration of data exchange with the internet, that the device and the router can exchange WiFi data at a higher rate than this. Overall constraints on the total amount of data that can be transferred in a certain billing period (e.g. 20 GB per month) are also irrelevant to this particular definition.

With a 3G connection there may be some capacity issues relating to different users sharing a common telecommunications base station, but a more relevant constraint again relates to signal strength of the 3G connection.

An example of the use of wireless networking relates to a PS3 device having a wired or WiFi connection, via a router, to the internet, in communication with one or more portable game machines such as Sony PlayStation Portable ® (PSP ®) devices. The PSP devices have WiFi connections to the PS3 device and any other PSP devices in the system - either directly or via the router to the PS3 device, so as to share a data processing task such as execution of a computer game. In other words, in one arrangement a PSP device can establish a so-called "ad-hoc" WiFi network connection with the PS3 device and any other PSP devices, i.e. a networking connection which does not rely on any pre-existing infrastructure such as a router; or in an alternative arrangement each PSP device and the PS3 device can establish a respective connection with the router, which in turn provides a network connection between the PS3 device and the PSP device(s). In any of these arrangements, the PS3 device and the PSP device(s) share a common internet connection via the router.

This invention provides a data network comprising:
a master data communications device;
one or more slave data communications devices; and
network interconnections linking the master device and the one or more slave devices for data communication;
in which:
the master device and the slave devices are arranged to cooperate for joint execution of a data processing task;
each of the master device and the one or more slave devices has a respective independent internet connection;
the master device is operable to select a route from a set of two or more routes for the exchange of data, relating to the data processing task, with an internet server, one of the routes being via the master device's own internet connection, and another of the routes being via one of the slave devices and that slave device's own internet connection; and
each slave device is operable to conduct all exchanges of data, relating to the data processing task and which require internet access, with the master device;
the arrangement being such that the master device's own internet connection and the one or more slave devices' own internet connections are consolidated to provide the master device with a consolidated internet connection of greater data transfer capacity than the master device's own internet connection alone; and that all exchanges of internet data relating to the data processing task take place via the master device and the consolidated internet connection.

Further respective aspects and features of the present invention will be defined in the appended claims.

Embodiments of the invention will now be described, by way of example only, with reference to the accompanying drawings in which:
Figure 1 schematically illustrates a connection between a PS3 device and the internet via a router;
Figure 2 schematically illustrates a portable electronic device (PED);
Figure 3 schematically illustrates an ad-hoc network of a PS3 device and a PED;
Figure 4 schematically illustrates an infrastructure-based network of a PS3 device and a PED;
Figure 5 schematically illustrates a network of a PS3 device and two PEDs;
Figure 6 schematically illustrates part of the operation of the PS3 device;
Figure 7 schematically illustrates part of the operation of a PED;
Figure 8 is a schematic flowchart showing a part of the operation of the PS3 device;
Figure 9 is a schematic flowchart showing a part of the operation of the PED; and
Figure 10 is a schematic flowchart showing a part of the operation of the PS3 device and the PED.

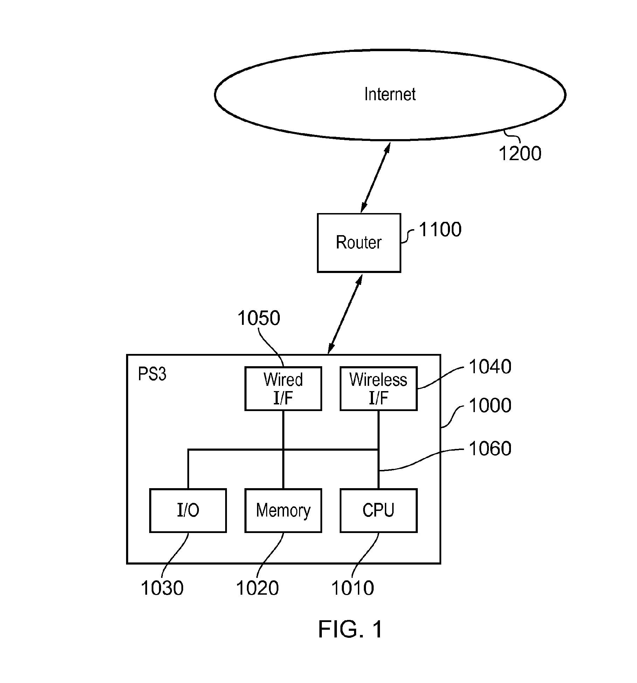

Referring now to Figure 1, a connection is schematically illustrated between a PS3 device 1000 and the internet 1200 via a router 1100.

The PS3 device will not be described in detail here, as it has been described extensively elsewhere, but for the present purposes some technical features of the PS3 device will be mentioned. In particular, the PS3 device comprises a central processing unit (CPU) 1010 (which in fact is a simplified representation of a CPU formed of multiple processing devices, but that level of detail is not required for the present description); memory 1020 such as volatile or non-volatile random access memory (RAM), read only memory (ROM), disk based storage or the like; an input/output (I/O) interface 1030 which, in the generic terms of the present abbreviated description, handles control inputs, audio and video outputs and data communications other than those relating to inter-device and internet transfers; and data networking interfaces 1040, 1050; all interconnected by a bus arrangement 1060.

The data networking interfaces 1040, 1050 are shown schematically as a wired network interface 1050 and a wireless network interface 1040. The wired interface is, in this example, a so-called Ethernet interface, though any other wired interface could be used. The wireless interface is, in this example, a WiFi interface, though again any other wireless interface such as a so-called Bluetooth ® interface could be used.

Figure 1 does not specify whether communication between the PS3 device 1000 and the router 1100 is via the wired interface 1050 or the wireless interface 1040. This is because this distinction does not in fact matter. However, purely in order to have a worked example, this description will assume that there is a wired connection between the PS3 devices 1000 and the router 1100.

Again, the connection between the router 1100 and the internet 1200 can be a wired broadband connection, e.g. via a digital subscriber line (DSL) broadband connection using a telephone line or a dedicated cable broadband connection, or a wireless broadband connection, e.g. via a wide area WiFi connection, a wireless telecommunications connection such as a 3G link to a telecommunications provider or a satellite downlink in combination with a wired or wireless uplink. The precise mechanism used to provide an internet connection for the PS3 device in Figure 1 (referred to as the PS3 device's own internet connection) is not important to the present embodiments, but for the purposes of having a worked example it will be assumed that the router has a wired connection to the internet.

The data transfer capacity of the PS3 device's internet connection in Figure 1 is determined by the greatest constraint on data transfer. It may well be the case that the connection between the PS3 device and the router has a high potential data transfer capacity, such as 50 Mbps, whereas the onward connection between the router and the internet may well have a much lower maximum capacity such as 1 Mbps. In this situation, the data transfer capacity of the PS3 device's internet connection in Figure 1 would be defined as the lowest of these rates, i.e. 1 Mbps in the present example.

The router 1100 is included in Figure 1 for convenience of explanation. Local routers are commonly used, particularly in domestic situations. However, the use of a local router should not be considered essential. Instead, in other embodiments, the PS3 device 1000 could have a "direct" internet connection, insofar as the distributed nature of the internet and the widespread use of routers within the internet network would allow such a term to be used - here the term "direct" would simply be used loosely to mean that a further routing device within the same building (e.g. the home) is not required. For example, the PS3 device's wireless interface 1040 could comprise a mobile telecommunications interface such as a 3G interface. This of course simply means that some functionality similar to that of the router 1100 might be shifted from the PS3 device's local environment to the telecommunications base station. Similarly, if the PS3 device achieved its own internet connection in Figure 1 via a WiFi link to a wide area WiFi network, again this would mean that all of the functionality of the router would not necessarily need to be within the local environment of the PS3 device, but would be somewhere else within the wider area. In general, it is possible to envisage situations where the function of a separate local router is not required at all.

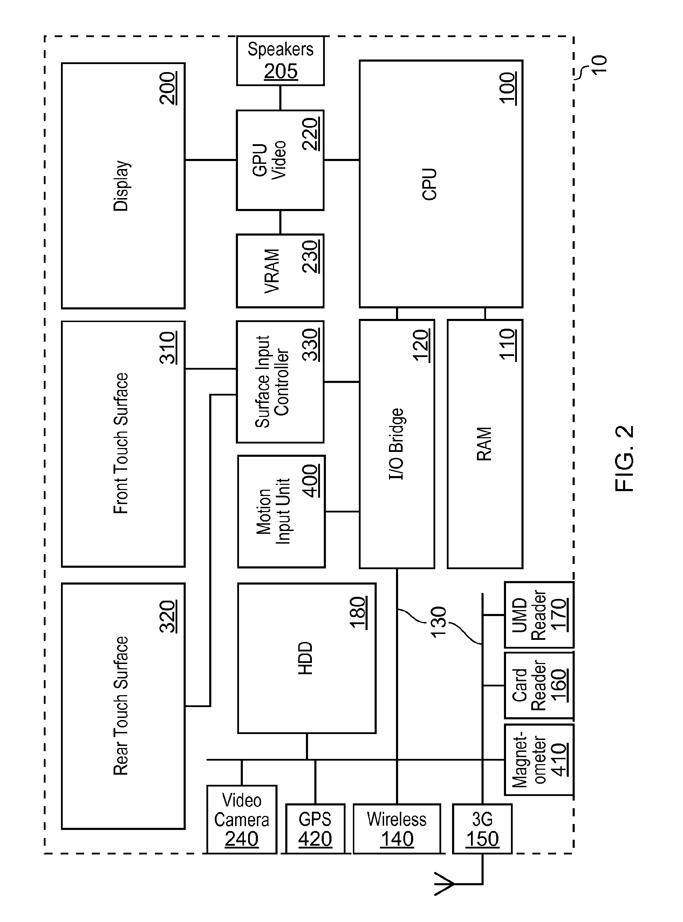

In embodiments of the invention, a data network comprises a PS3 device acting as a master data communication device and one or more further slave data communication devices, interconnected for data transfer. An example of a suitable slave device will now be described with reference to Figure 2.

Figure 2 schematically illustrates an embodiment of a portable electronic device (PED) 10. The device has a shape and size similar to a mobile phone, a so-called personal digital assistant (PDA) or a PSP device, having a generally rectangular shape with front and rear faces substantially parallel to each other.

On the front face, the PED comprises a display 200 and optionally one or more loudspeakers 205L, 205R.

On the rear face, the PED comprises a rear touch sensitive surface 320 (e.g. a capacitance-detecting touch panel) having similar dimensions to the display 200. The rear touch sensitive surface is positioned so as to be substantially aligned with the display. That is to say, considered in a direction normal to the plane of the display, the rear touch sensitive surface substantially overlies the display.

A transparent front touch sensitive surface 310 is also provided coincident with the display 200. That is to say, the front touch sensitive surface covers substantially the same region of the device as the display. The front and rear touch sensitive surfaces and the display thus have similar dimensions and placements on their respective faces of the device. The touch sensitive surfaces also have a similar resolution of touch localisation. The front touch sensitive surface operates in a similar manner to the rear touch sensitive surface, but in this instance, any conductive lines (forming part of the capacitance detection system) are typically transparent (as a non limiting example, being formed by a deposition of indium tin oxide), and the insulator between two layers is provided by all or part of the display window (e.g. a glass layer); typically a further transparent protective layer is then provided on top of the upper conductive layer. In this way, the display can be seen despite the presence of the front touch sensitive surface.

Internally, the PED comprises a central processor (CPU) 100 coupled to a random access memory (RAM) 110, and optionally to a read only memory (not shown). In addition the CPU communicates with a graphics processing unit (GPU) 220. The GPU has access to video RAM (VRAM) 230. The GPU outputs audio to loudspeaker(s) 205 and/or to a headphone jack socket (not shown). The GPU also outputs video information to the display 200. The display is typically a liquid crystal display (LCD) but may be an organic light emitting diode display (OLED) or similar suitable display technology.

In addition, the CPU communicates with an input / outputs bridge (I/O bridge) 120 that co-ordinates communication with peripheral components both integral to and linkable with the PED. In an embodiment of the PED the I/O bridge communicates with a surface input controller 330, which parses inputs from the rear touch sensitive surface 320 and optionally the transparent front touch sensitive surface 310. The I/O bridge also communicates with an optional motion input unit 400 comprising one or more micro electromechanical (MEMs) accelerometers and/or gyroscopes, to provide up to six axes of motion input (x, y and z axis lateral movement and roll, pitch and yaw rotational movement).The I/O bridge also communicates with a bus 130, upon which various peripheral devices may be linked, including one or more wireless communication units 140, such as for example WiFi and / or Bluetooth ® interfaces.

It will be appreciated that the CPU 100 may be a single core or multi core processor. Similarly, the RAM may be dynamic RAM or may comprise both dynamic RAM and static (e.g. flash) RAM units. Likewise, whilst the GPU typically uses dedicated VRAM, alternatively or in addition it may share common RAM with the CPU. Finally, it will be appreciated that the function of the surface input controller 330 may be performed by the CPU itself.

It will also be appreciated that whilst not shown in the Figure for the purposes of clarity, the PED comprises power distribution lines to various components and one or more sources of power, such as an input socket (for example a conventional DC power socket, or alternatively or in addition a USB socket). Such an input socket may also be used to charge one or more batteries (also not shown). Such batteries may be user removable or may be sealed in the device. Other components not shown include, for example, an optional microphone.

The PED may comprise one or more additional components, either integrated within the device or connectable to it. The additional components include, but are not limited to, the following.
a) A card reader 160 suitable for reading from and optionally writing to memory cards, such as a Sony ® Memory Stick ® card, or alternatively legacy memory cards such as those used by the Sony ® Playstation 2 ® entertainment device. Such a reader may be integral to the PED or may connect to the bus 130 via a USB connection.
b) A universal media disk (UMD) reader 170 or other optical disk reader (such as a DVD or Blu-Ray® disk reader), for accessing media and/or game content stored thereon. Such a reader may be removably connectable to the bus 130 via a USB or proprietary connection.
c) A magnetometer 410 for determining compass direction (i.e. the current absolute orientation of the PED), mounted integral to the PED either on the bus 130 or as part of the motion input unit 400.
d) A hard disk drive (HDD) 180 integral to the PED, providing bulk storage for audio /video media, downloaded games, and the like.
e) A GPS receiver 420. Again the GPS receiver may share an aerial with one or more other wireless units (such as WiFi) within the PED or may use its own aerial. Map information, where used, may be stored locally at the receiver, or in flash RAM of the PED, or on an HDD of the PED.
f) A video camera 240, typically comprising a charge coupled device (CCD) optical sensor and suitable optics for imaging onto the CCD. The resolution of the CCD may for example be 640x480 pixels, but may be any suitable resolution, such as for example 1920x1080 pixels (full HD). In an embodiment the video camera is integral to the PED, but alternatively may be removably connectable to the bus 130 via a USB or proprietary connection. An embodiment of the PED comprises two such video cameras 240, forming a stereoscopic pair.

The PED also comprises a third generation (3G) or other mobile telephony module 150. In an embodiment, the module and aerial are integral to the PED, and optionally the aerial is shared with or otherwise coupled electromagnetically with other wireless units in the device for the purpose of transmission and reception. Alternatively the module may be removably connectable to the PED, for example via USB port or a Personal Computer Memory Card International Association (PCMCIA) slot.

In operation, the CPU accesses an operating system that is resident for example on a ROM, flash RAM or the hard disk (if present). The operating system co-ordinates operation of the various functions of the PED and presents a user interface to a user of the device. The user interface will typically comprise graphical outputs via the display and touch based inputs, but may also include audio outputs and/or motion-based inputs.

Significant features of the PED 10, for the purposes of the present description, are the mobile telephony module 150 and the wireless communication unit 140. Both of these will be referred to in the descriptions below of data networks incorporating a PS3 device and one or more PEDs.

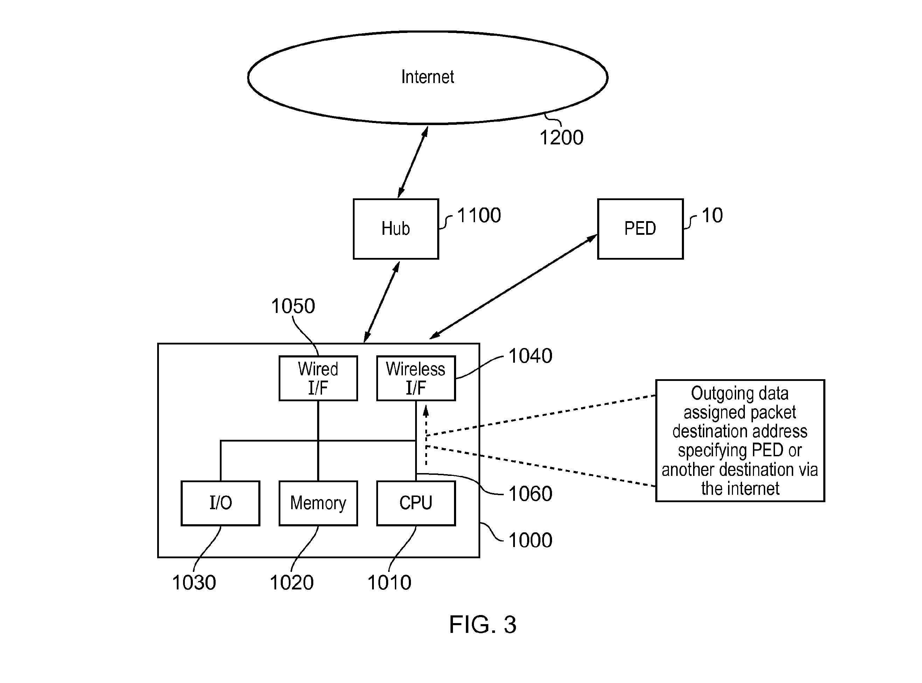

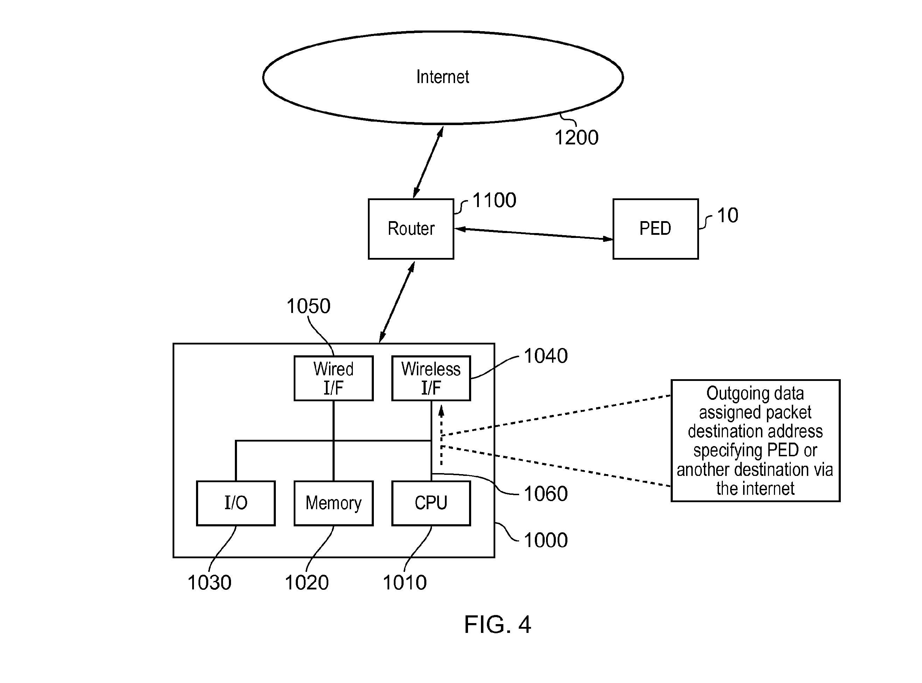

Figure 3 schematically illustrates a data network comprising a PS3 device 1000 and a PED 10. The PED forms a so-called "ad-hoc" network with the PS3 device, which is to say that it connects (e.g. via WiFi, Bluetooth, or even a wired connection such as a Universal Serial Bus (USB) connection) directly to the PS3 device without using other infrastructure such as the router 1100. Figure 4 schematically illustrates another possibility, in which the PED 10 connects to the PS3 device for data communication, but in this instance the connection is via other infrastructure (the router 1100 in this example). As far as data communication between the PS3 device and the PED is concerned, the two types of connection and communication, i.e. that shown in Figure 3 and that shown in Figure 4, are considered technically equivalent.

The networks of Figures 3 and 4 are established for the purposes of game playing, though other common purposes such as the provision of streamed video or audio to the PED(s) would be equally applicable. That is to say, the joint execution of a computer game forms a data processing task which is shared, distributed or otherwise executed cooperatively between the networked devices (the PS3 device and the PED). In one example this can involve the PS3 device carrying out almost the whole of the processing required to play the game, using the PED merely as a "dumb" terminal which outputs video and audio sent to it from the PS3 device and returns control commands to the PS3 device based on user operation of the PED's control inputs. In another example, processing is more significantly shared between the PS3 device and the PED, with the PED for example rendering its own display from data defining an underlying game landscape, or acting on images captured by its camera to detest image features and provide data defining those features to the PS3 device. In another example, a part of the game is executed at an internet server, and the PS3 device sends data to and receives data from such an internet server. In a further example, the PED and the PS3 device can execute complementary or competing parts of a game program (or multiple instances of a game program) so that the PS3 device's user can compete against the PED's user. All of these examples are referred to here as the "joint" execution of the data processing task, i.e. the computer game.

In many examples of contemporary computer games, there is a need or a preference to access data stored on an internet server; in the networks of Figures 3 and 4 it is the PS3 device, acting as a master device, which carries out such internet access in relation to the execution of the game software. The PED, acting as a slave device, communicates only with the PS3 device in respect of the execution of the game software. In other words, the PED does not interact directly with an internet server in respect of the shared game which is at least partially executed by the PS3 device.

This is not to say that the PED never contacts the internet in its own right. Devices like the PED are often multi-functional, for example handling emails or other internet data as a portable terminal for the device's user. So the PED might exchange data with internet servers in respect of, say, email interactions as a background task while executing the game software as a slave to the PS3 device. However such independent interactions do not affect the feature described above, that the PED does not interact directly with an internet server in respect of execution of the shared game.

Accordingly, any outgoing data from the PS3 device is assigned a packet destination address according to known protocols for packet addresses (such as the "IP" protocol), which address defines that packet's destination as either the PED 10 or another destination via the internet.

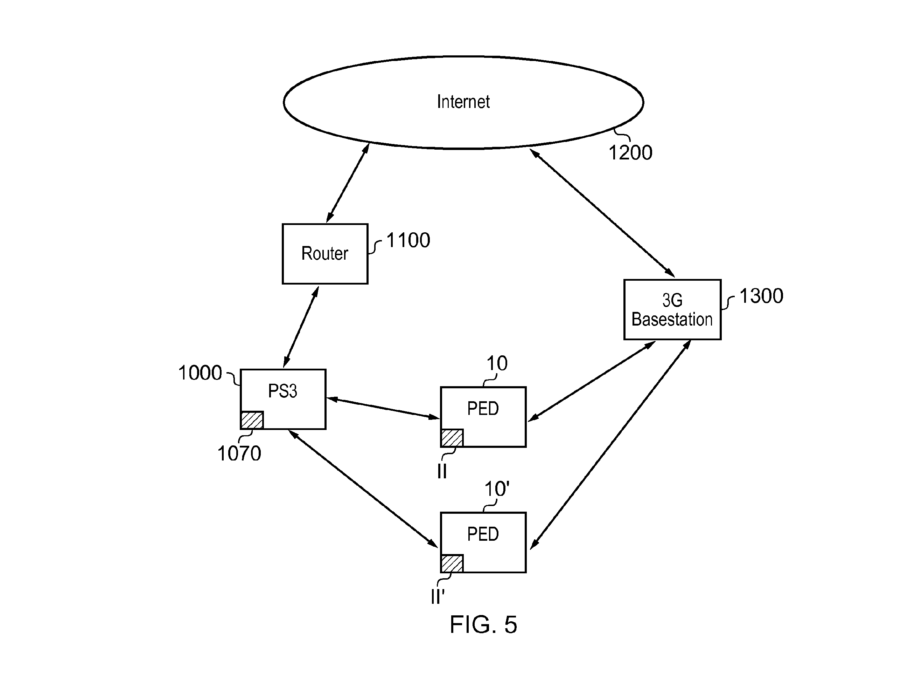

Figure 5 schematically illustrates a network of two PEDs 10, 10' and a PS3 device which are networked so as to execute game software in a cooperative manner. Again, the PS3 device is acting as a master device and the PEDs as slave devices according to the definitions provided here, which means that only the PS3 device exchanges data, relating to the execution of the game software, in its own right via the internet, e.g. with an internet server.

As before, the PS3 device connects to the internet (its "own" connection) via the router 1100. The PEDs each form an ad-hoc network with the PS3 device, though the alternative in which one or more of the PEDs forms a network via the router 1100 is of course possible. The PEDs also each provide an internet connection over a telecommunications link to a telecommunications base station (here shown schematically as a 3G base station) 1300.

So, each of the PS3 device and the PEDs has its own independent internet connection which does not rely on data (e.g. data packets) being routed via any other of the PS3 device and the PEDs. However, the term "independent internet connection" implies more than this, as the definition of independence to be used here excludes the possibility that the PS3 device and the PEDs share internet access via (for example) a common domestic router; the PS3 and the PEDs use independent modes of access to the internet. For example, they may each have different externally-facing IP addresses.

As mentioned above, in the joint execution of the computer game by the PS3 device and the PEDs, there is often the need to access the internet, for example to obtain upgrades or game character information, to retrieve or store collaborative game playing information, to retrieve or store media files or the like. In the present arrangement such internet access, in respect of data relating to the execution of the computer game software, is undertaken solely by the master device, in this case the PS3 device. This constraint applies even if a data request, relating to the data processing task, is initiated by a slave device (in this case a PED), or an incoming data transfer has a slave device as its destination. The way in which this is achieved will now be described.

The PS3 device has its own internet connection, via the router 1100. This has a certain data transfer capacity, e.g. 1 Mbps. Each of the PEDs also has its own respective internet connection, in this example a 3G connection. Each of these connections will also have a particular data transfer capacity. Factors which influence data transfer capacity have been described above.

In the present embodiment, as far as the PS3 device is concerned, these various internet connections are consolidated to provide the PS3 device with a consolidated internet connection having a data transfer capacity greater than the data transfer capacity of the PS3 device's own internet connection. In principle the consolidated internet connection can have a data transfer capacity equal to the sum of the data transfer capacities of the master device and the slave device(s), though in practice it is likely to be less than this sum in order to allow capacity for each slave device to conduct individual internet data transfers as described above.

The basic principle is that for each exchange of data initiated by the master device, the master device itself takes on part of the function of an Ethernet router. The network interfaces 1040, 1050 and the CPU 1010 cooperate to send data packets which have an internet destination address either to the router 1100 (which will automatically forward those packets to the internet) or to a PED 10.

To achieve this, the PS3 device maintains a configuration table 1070, which in general terms contains at least information on which connections lead to particular groups of packet addresses; priorities for connections to be used for outgoing data traffic; and (optionally) rules for handling both routine and special cases of data traffic.

The PS3 can distinguish data traffic having an internet destination or source by the IP address associated with such data.

More specifically, the configuration table 1070 provides a look-up table to show where and how any particular packet should be routed, e.g. which route the master device should select for outgoing data having an intemet destination. For a packet having an internet destination, the configuration table defines the choice between a route via the router 1100, a route via the PED 10 and a route via the PED 10'. Examples of how this choice may be made will now be defined.

In a first example, the configuration table is set up so as to route all internet-destination packets via the router 1100 unless the capacity of the router 1100's internet connection has been reached (which will be signified by the router 1100 rejecting packets sent to it in excess of the data rate that it can handle). If the router 1100's internet connection is fully utilised, then packets are sent to the PEDs 10, 10' for forwarding to the internet.

In a second example, internet-destination data traffic is actively shared between the router 1100 and the PEDs. This can be achieved by sending successive packets to different routes by rotation, but that is not necessarily ideal as it could lead to somewhat different transit times for packets relating to the same overall message. So it is preferable to share the data traffic on a coarser level, by sending a group of packets by one route, then switching to a next route in the rotation.

In a third example, the PEDs are treated as the main internet connection and are used until their capacity is reached, when the router 1100 is then also used as a reserve. As wireless telecommunications systems improve it is quite possible to envisage that the PEDs may have a better data transfer capacity than a domestic wired internet connection.

In a fourth example, data packets are routed via the current fastest connection, with the next fastest connection being first reserve, and so on. The PS3 device (and in particular, the CPU 1010 and the wireless interface 1040 cooperating to act as a connection speed detector) determines relative connection speed by periodically sending a query ("pinging") a remote internet site via each available route. The site to be pinged could be for example a site which is commonly accessed by game applications. A ping query normally receives a reply, and the current fastest connection is determined by the PS3 comparing the time between the pings being sent and the replies arriving. The PS3 device can repeat this analysis, for example every minute, and in this way keep its configuration table up to date so as to define (at least to a resolution of the ping repetition period) the current fastest connection, the next fastest connection, and so on. The fastest connection is used until its data transfer capacity is reached, then the next fastest is used for excess data, and so on.

In a fifth example, the PS3 device maintains a record of the total amount of data transmitted via each route, and a record of any caps or limits on data transfer by the different routes, where exceeding the cap or limit could incur additional charges. Here the concern is to do with total data quantities rather than instantaneous data rates. Once a cap or limit has been reached, the PS3 device reconfigures the configuration table so as either to use that particular route less or not to use it at all, until the next charging period.

In the case that there are multiple PEDs in the system, the selection between multiple PEDs can be according to an arbitrary order, e.g. the first PED to have joined the network becomes the first choice for packet routing after the router 1100, until that PED's data transfer capacity is reached when packets are also sent to the next PED and so on. Or traffic that is to be routed via a PED could be shared generally evenly between the available PEDs. In an embodiment, the PEDs provide a user control whereby a PED user can opt out of allowing his PED to provide internet connectivity to the shared game, for example because that PED operates on a telecommunications tariff which charges by the quantity of data transferred. Or connection speed can be used to decide between them, as discussed above.

Whenever the PS3 device 1000 joins a network with the router 1100, and whenever a PED joins a network with the PS3 device, the PS3 device updates its configuration table. To achieve this, the PS3 device first detects whether the router or PED device provides an independent internet connection. It achieves this by sending a ping to an internet site via each potential route, and detecting whether it receives a reply by that route. Alternatively the master device can send a query to each newly joined PED to ask the PED whether the PED has an active independent internet connection which does not require routing via the master device or the router 1100 (i.e. if the PED has its own internet connection). A communication arrangement is provided so that the PED can reply with information giving details of its own internet connection. Such details can include the nominal capacity of the PED's own independent internet connection and/or a connection speed derived from a ping test conducted by the PED.

In either case, from this information the PS3 device builds up routing information in the configuration table. Any PEDs which do not have their own internet connection are excluded by the master device from a list of available routes.

The PEDs also establish a similar, though perhaps somewhat smaller, configuration table 11, 11'. This defines how the PED handles an incoming packet from the PS3 device, and how the PED handles outgoing traffic relating to the shared game.

For incoming traffic from the PS3 device, the PED's configuration table defines that any packet with an internet destination is forwarded to the internet via that PED's own internet connection (e.g. the 3G connection). Any packet having that PED as a destination is stored locally. For outgoing traffic from the PED relating to the shared game, the configuration table indicates that such packets are routed to the PS3 device only. Such packets can be distinguished from other outgoing packets (e.g. those relating to a background task which updates emails) by the destination IP address, which would be the address of the PS3 device or an address of a game server for example, or at least on a known list relating to that shared game, and/or by their port number, which could be set by the game to a dummy port number specific to that game.

Routing all outgoing traffic from the PEDs via the PS3 device allows the PS3 device, acting as master in respect of the current shared game, to use substantially all of the PED's internet connection data transfer capacity as part of the consolidated internet connection, and also to balance different data access requirements (i.e. those of the various PEDs and the PS3 device itself) in case the data transfer capacity of that consolidated internet connection is reached, the balancing being an attempt to make sure that data which is most critical to the current stage and actions in the game is transmitted first.

When the PS3 device receives a packet from the PED which has an internet destination, it routes that packet according to the rules discussed above in relation to the PS3 device's configuration table. This may in fact involve returning that packet to the source PED or another PED for onward transmission to the internet. This is not a problem, as the available data transfer rates for local networks are generally very much higher than the available data transfer rates for internet connections. So, sending the packet twice on the local network would not significantly affect the loading of the local network.

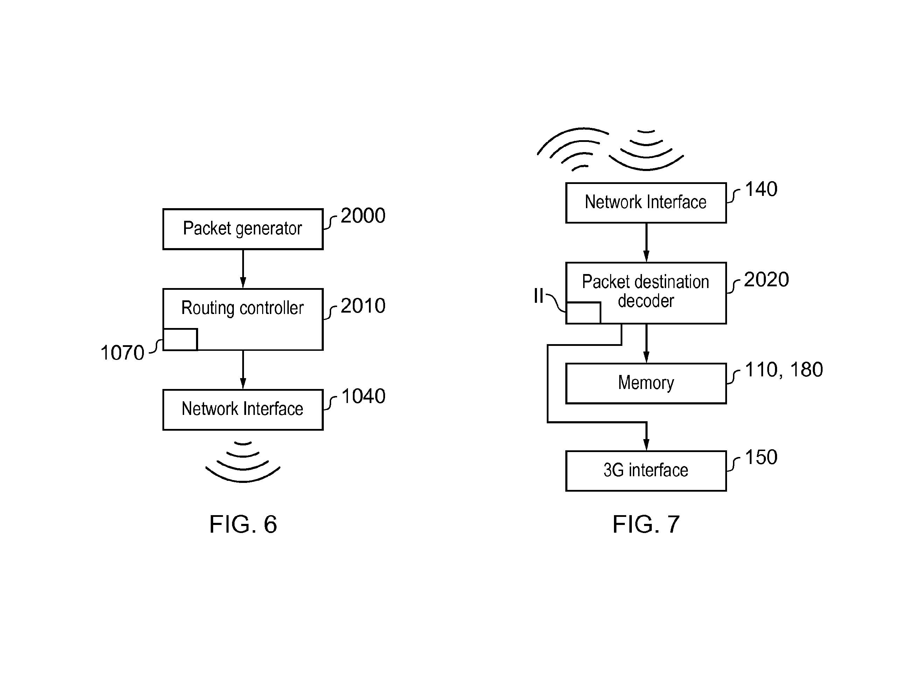

Some of these operations will now be summarised with reference to Figures 6 to 10.

Figures 6 and 7 schematically illustrate part of the operation of the PS3 device and part of the operation of a PED respectively.

In Figure 6, the CPU 1010 and/or the network interface 1040 of the PS3 device act under software control to provide the functions of a packet generator 2000 and a routing controller 1070, which makes use of the configuration table 1070 to route data packets according to the rules set out above.

In Figure 7, the CPU 100 of the PED and/or the network interface 140 act under software control to provide the functions of a packet destination decoder 2020 (in effect, a data packet receiver) which also acts as a data packet forwarder to route a received packet either to memory (e.g. the RAM 110 or the hard disk storage 180) if the received packet is destined for that PED, or to the 3G interface 150 if the received packet has an internet destination.

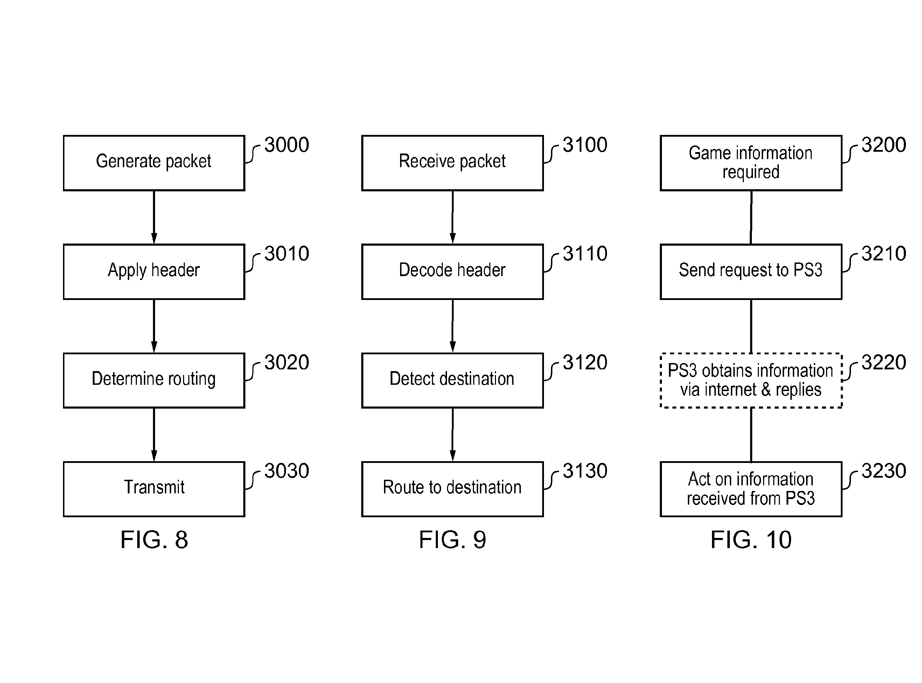

Figures 8 to 10 are schematic flowcharts illustrating some of the operations described above.

Figure 8 schematically illustrates part of the operation of the PS3 device. At a step 3000, an outgoing data packet is generated, and at a step 3010 a header is applied which includes the destination address of that packet. At a step 3020 a route, from a set of two or more routes, is selected for that packet and at a step 3030 the packet is transmitted according to the selected route.

Figure 9 schematically illustrates part of the operation of a PED. At a step 3100 a packet is received via the local network. At a step 3110 the header of that packet is decoded so that the packet's destination can be detected at a step 3120. At a step 3130, the packet is routed to its correct destination, which will generally be either local storage at that PED or onward routing via the PED's own internet connection.

Figure 10 schematically illustrates part of the operation of the PS3 device and the PED. At a step 3200, the PED determines that it requires particular game-related information, i.e. information relating to the shared game in operation with the PS3 device. At a step 3210 the PED sends a request for that information to the PS3 device. The PS3 device may be able to provide that information itself (for example, an updated display image) or alternatively the PS3 device may seek that information from an internet server at a step 3220. In either case, the PS3 device sends a reply to the PED - either substantially straight away (if the PS3 device can provide the requested information itself) or once the PS3 device has received a reply to its internet query. At a step 3230 the PED acts on the information received from the PS3 device.

The examples described above have related to a games machine as the master device and portable or even handheld devices (also games machines) as the slave devices. Of course, other machines having their own internet connections could be included in the network, and it is the choice of the games designer as to which machine becomes the master and which become the slaves. For example, in the network shown in Figure 5, it could be that one of the PEDs is in fact designated the master device.

It will be appreciated that many of the operations described above may be implemented in embodiments of the invention by parts of the PS3 device and/or the PED acting under appropriate software control. Such software may be stored by the PS3 device or the PED (e.g. in the memory 1020, the RAM 110 or the hard disk storage 180), or may be stored on a storage medium which can be accessed by the PS3 device (e.g. an optical disk or removable memory card), or may be provided to the PS3 device or the PED over a network, such as by an internet connection, or may be embodied in firmware, for example as part of a field programmable gate array or application specific integrated circuit. It will therefore be appreciated that such software, a computer program product embodying such software, and/or a storage or providing medium which provides such software, are all envisaged as embodiments of the present invention.

## Claims

1. A data network comprising:
a master data communications device;
one or more slave data communications devices; and
network interconnections linking the master device and the one or more slave devices for data communication;
in which:
the master device and the slave devices are arranged to cooperate for joint execution of a data processing task;
each of the master device and the one or more slave devices has a respective independent internet connection;
the master device is operable to select a route from a set of two or more routes for the exchange of data, relating to the data processing task, with an internet server, one of the routes being via the master device's own internet connection, and another of the routes being via one of the slave devices and that slave device's own internet connection; and
each slave device is operable to conduct all exchanges of data, relating to the data processing task and which require internet access, with the master device;
the arrangement being such that the master device's own internet connection and the one or more slave devices' own internet connections are consolidated to provide the master device with a consolidated internet connection of greater data transfer capacity than the master device's own internet connection alone; and that all exchanges of internet data relating to the data processing task take place via the master device and the consolidated internet connection.

2. A data network according to claim 1, in which the one or more slave devices each comprise a wireless telecommunications interface, and each slave device's own internet connection is provided by the wireless telecommunications interface, in communication with a telecommunications provider.

3. A data network according to claim 2, in which the master device's own internet connection comprises a digital subscriber line or cable broadband data connection.

4. A data network according to any one of claims 1 to 3, in which the one or more slave devices each comprise a wireless interface providing local device to device communication, and the network interconnections are such that the one or more slave devices communicate with the master device using their respective wireless interface.

5. A data network according to any one of the preceding claims, in which each slave device comprises:
a data packet receiver, operable to receive data in the form of data packets from the master device, the data packet receiver being arranged to detect whether a received data packet's destination is that slave device or an internet destination; and
a data packet forwarder operable to forward to the internet in the form of packets, via the slave device's own internet connection, any data received from the master device which is detected to have an internet destination.

6. A data network according to any one of the preceding claims, in which the one or more slave devices provide a user control allowing the user to opt out of allowing that slave device's own internet connection to form part of the consolidated internet connection.

7. A data network according to any one of the preceding claims, in which the master device maintains a configuration table defining which route the master device should select for outgoing data having an internet destination.

8. A data network according to any one of the preceding claims, in which the master device is arranged so as to select its own internet connection as a route for outgoing data having an internet destination unless the data transfer capacity of that internet connection has been reached.

9. A data network according to any one of claims 1 to 7, in which the master device comprises a connection speed detector operable to detect internet connection speeds applicable to the different routes in the set of routes; and in which the master device is arranged so as to select the fastest internet connection as a route for outgoing data having an internet destination unless the data transfer capacity of that internet connection has been reached.

10. A data network according to any one of the preceding claims, in which the master device and the one or more slave devices are games machines, and the data processing task is the execution of a computer game.

11. A data network according to any one of the preceding claims, in which:
the master device and the one or more slave devices comprise a communication arrangement to allow each slave device to communicate to the master device details of its own internet connection; and
the master device is arranged so as not to select a slave device as a route for an exchange of data with an internet server if that slave device communicates to the master device that the slave device does not currently have a respective independent internet connection.

12. A method of operation of a data network having a master data communications device, one or more slave data communications devices, and network interconnections linking the master device and the one or more slave devices for data communication, each of the master device and the one or more slave devices having a respective independent internet connection, and in which the master device and the slave devices are arranged to cooperate for joint execution of a data processing task;
the method comprising:
the master device selecting a route from a set of two or more routes for the exchange of data, relating to the data processing task, with an internet server, one of the routes being via the master device's own internet connection, and another of the routes being via one of the slave devices and that slave device's own internet connection; and
each slave device conducting all exchanges of data, relating to the data processing task and which require internet access, with the master device;
the method being such that the master device's own internet connection and the one or more slave devices' own internet connections are consolidated to provide the master device with a consolidated internet connection of greater data transfer capacity than the master device's own internet connection; and that all exchanges of internet data relating to the data processing task take place via the master device and the consolidated internet connection.

13. Computer software for implementing a method according to claim 12.
